Europäisches Patentamt

European Patent Office

Office européen des brevets

(19)

(11) Publication number: **0 046 647**
**A2**

(12) # EUROPEAN PATENT APPLICATION

(21) Application number: **81303678.7**

(22) Date of filing: **13.08.81**

(51) Int. Cl.³: **G 01 D 5/30**
**G 01 B 11/02, G 01 C 15/00**
**G 01 C 9/06**

(30) Priority: **21.08.80 GB 8027254**

(43) Date of publication of application:
**03.03.82 Bulletin 82/9**

(84) Designated Contracting States:
**AT BE CH DE FR GB IT LI LU NL SE**

(71) Applicant: **IDC GROUP LIMITED**
**Timothy's Bridge Road**
**Stratford-upon-Avon Warwickshire CV37 9NJ(GB)**

(72) Inventor: **Mattingly, Christopher Thomas**
**Canon Frone Court**
**Nr. Ledbury Herefordshire(GB)**

(74) Representative: **Anderson, John Robert**
**Browning et al,**
**WALFORD AND HARDMAN BROWN Trinity House Hales
Street**
**Coventry West Midlands CV1 1NP(GB)**

(54) Digital measuring device.

(57) A digital measuring device particularly to be used in making surveying measurements. For example, the device may be used to measure linear distance in conjunction with a tape; linear deviation from a datum on a levelling staff and thus difference in level, or linear deviation from a datum in a level or clinometer. The digital measuring device comprises an array of light-sensitive elements (2) positioned at predetermined very small spacings from each other and from a reference point along a locus; a comparator (5) for detecting which of the elements (2) are illuminated by a light beam (3) directed onto the array from a remote source; processor circuitry (11) to determine the position of the centre of a group of adjacent illuminated elements, in the direction of the locus, from the reference point and to produce a corresponding digital output, and circuitry (10) to receive said digital output and to display, record or transmit data corresponding to said digital output.

FIG.1

## DIGITAL MEASURING DEVICE

The invention relates to a digital measuring device and is particularly, but not exclusively, concerned with a digital measuring device to be used in making surveying measurements. For example, the device may be used to measure linear distance in conjunction with a tape; linear deviation from a datum on a levelling staff and thus difference in level, or linear deviation from a datum in a level or clinometer. Generally, the device may be used to measure or to detect linear deviation from a datum in any type of instrument.

An object of the invention is to provide a digital measuring device by which extremely small linear distances can be detected. Thus the invention provides an extremely sensitive digital measuring device.

According to the invention, a digital measuring device comprises an array of light-sensitive elements positioned at predetermined spacings from each other and from a reference point along a locus; means for detecting which of the elements are illuminated by a light beam directed onto the array from a source remote therefrom; processor means to determine the position of the centre of a group of adjacent illuminated elements, in the direction of the locus, from the reference point and to produce a corresponding digital output, and an output device to receive said digital output and to perform any of the following functions or any combination thereof:- to display, record or to transmit data corresponding to said digital output.

The processor means may conveniently include a pulse generator operable to produce a serial train of regular pulses, and a shift register receiving information from the detector means and operable to produce a shift register output having a low output (0) corresponding to unlit elements of the array and a high output (1) corresponding to the illuminated elements of the array, the processor means also including means for counting one unit for each pulse of the serial train during the low output (0) and one unit for each pair of adjacent pulses of the serial train during the high output (1) and means for stopping the count at the pulse which occurs when the high output (1) changes to low output (0), the total count therefore representing the number of whole pulses from the commencement of the serial train to the pulse when the high output (1) changes to low output (0) and thus being equivalent to the linear distance along the locus from the aforesaid reference point, at which point the serial train is started, to the mid-point of the group of adjacent illuminated elements of the array.

The measuring device may include a datum register operable to store an output signal from the shift register as a datum value; a current reading register operable to store an instantaneous output signal from the shift register; a digital comparator operable to compare a value stored by the current reading register and a value stored by the datum register, and control logic means connected to receive a first input signal from the output of the digital computer, which signal changes between low (0) and high (1) depending whether or not the values compared by the digital comparator are equal and a second input signal being an end of count signal from said means for stopping the count, the control logic means having a clocked output signal which is led to said output device and produced only during the period when the first and second input signals to said control logic means are unequal, that is when one is low (0) and the other is high (1) and vice versa.

In a measuring device, the variable dimension to be measured may be arranged to effect relative movement between a light beam and the array, the linear distance measured along the locus of the array from the reference point to the mid-point of the group of adjacent illuminated elements of the array being a function of the variable dimension.

Particular measurements for which the digital measuring device, according to this invention, can be used may be of the kind which are made in surveying and therefore the digital measuring device may be incorporated in, for example, a tape measure, a surveyor's levelling staff and an instrument such as a level or clinometer. Examples of these are described hereinafter. However, the digital measuring device may have other applications wherever the variable dimension being measured can be used to effect the aforesaid relative movement between a light beam and the array. For example the light beam could be arranged to be moved along a fixed array in response to thermal expansion of a member to measure temperature, a pressure element to measure pressure, or a member moved in response to weight in a weighing machine.

Embodiments and applications of the digital measuring device in accordance with the invention are now described, by way of example, with reference to the accompanying diagrams and sketches, in which:

Figure 1 is a 'block' circuit diagram of the various parts of the digital measuring device;

Figures 2(a), (b) , (c) and (d) are pulse diagrams illustrating the function of parts of the circuit illustrated in Figure 1;

Figure 3 is a sketch of the incorporation of the array illustrated by block 1 in Figure 1 on a levelling staff;

Figure 4 is a sketch showing the incorporation of the array in a tape measure;

Figure 5 is a sketch showing the incorporation of the array into a device for indicating deflection of a member under load, and

Figures 6 and 7 are sketches showing the incorporation of the array in instruments such as a level or clinometer.

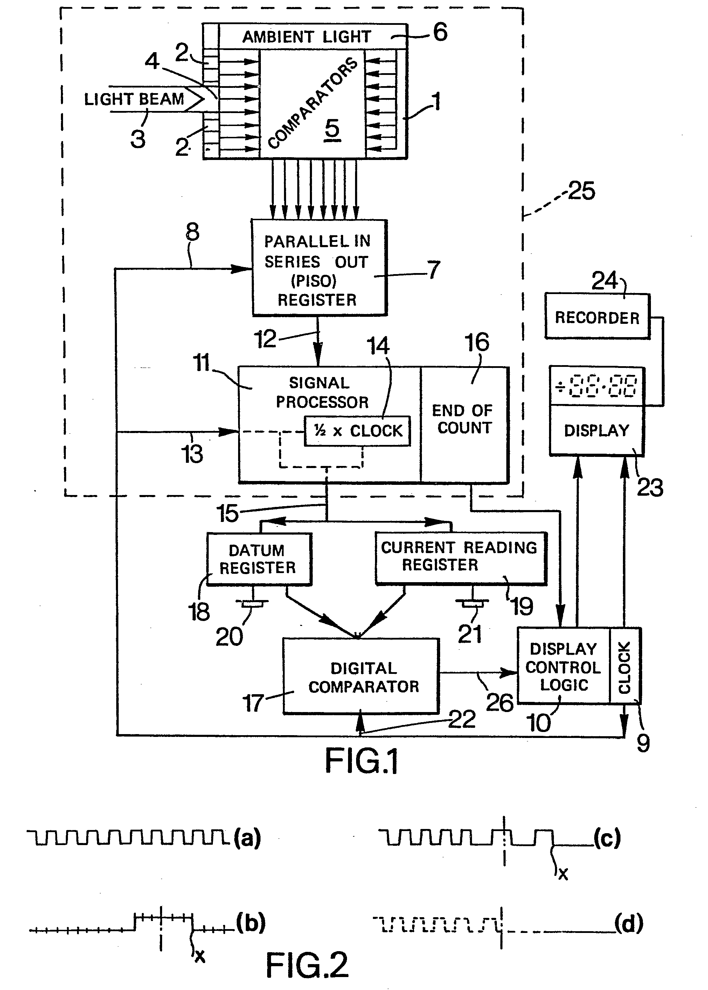

Referring to Figure 1, block 1 contains an array of light-sensitive elements 2 positioned at predetermined spacings from each other. The elements 2 are conveniently light-sensitive diodes and these can be spaced as close as 40 microns from each other. Thus units of linear distances in the length of the array as small as 40 microns can be measured. The light-sensitive elements 2 of the array are arranged in a straight line but they could be arranged in another locus, for example, the arc of a circle. A light source positioned remotely from the array is arranged to illuminate the array. This is indicated diagrammatically by a light beam 3 which illuminates a group 4 of adjacent elements 2.

The block 1 also includes a group of comparators 5 which receive analogue signals from the individual elements 2 and compare each of them with a reference signal from an ambient light sensor 6. The output is either low (0) or high (1) according to the absence or presence of a high light level from the beam 3. Thus a parallel output of low (0) and high (1) digital signals is produced by the group of comparators 5. This produces a pulse diagram of outline shape similar to that shown in Figure 2 (b). The comparators 5 are available in a package form, such as LN 339.

The parallel output from the comparators 5 is fed into a parallel input - series output register (P1SO) 7. This is a standard component or group of components which receives and stores the parallel input signals from the comparators 5 and stores these until a sequence of input clock pulses is applied at 8, derived from a clock generator 9 in DISPLAY CONTROL LOGIC circuit 10, to be described later. The clock pulses at 8 apply the digital signals from the comparators 5 in series form to a signal processor 11. Thus the output from P1SO 7 and the input to signal processor 11 at 12·is of the form shown in Figure 2 (b) produced as a series of signals at the intervals produced by the clock pulses, indicated at 2(a).

The signal processor 11 receives the clock pulses at 13 from the clock generator 9 and also contains a shift register or switch 14 which when operable changes the input 13 from the clock generator 9 to half-clock rate according to the low (0) or high (1) condition of the P1SO output 12. This produces at 15 the pulse diagram 2(c) up to the point X at the end of the pulse where the signal 12 changes from high (1) to low (0). The signal processor 11 also includes an END OF COUNT circuit 16 which applies a signal to the DISPLAY CONTROL LOGIC 10 to stop the counting of the pulses at point X. Thus the output signal at 15 is equivalent to the pulse diagram 2(c) although termination at point X does not occur until a signal is applied to the display control logic 10.

In the particular circuitry illustrated in Figure 1, the output signal at 15 is then passed to a digital comparator 17 and it is an output signal from the latter which is applied together with the END OF COUNT signal to the DISPLAY CONTROL LOGIC 10. However for the present explanation it is assumed that the output signal at 15 is passed directly to the DISPLAY CONTROL LOGIC. The primary purpose of the latter is to count the number of pulses produced at 15 up to point X, the "half clock" pulses which are produced during a high (1) input at 12 to the signal processor 11 each being counted as one pulse. Thus the total number of pulses counted by the DISPLAY CONTROL LOGIC and displayed or recorded indicates the position of the mid-point of the illuminated group 4 of the elements 2 of the array from the reference point. The pulse diagram to which the DISPLAY CONTROL LOGIC 10 responds is therefore equivalent to Figure 2(d).

In the particular circuitry shown in Figure 1, the output at 15 can be fed into either a DATUM register 18 or a CURRENT READING REGISTER 19 under the control of one or other of push-buttons 20, 21. The output from the CURRENT READING REGISTER 19 is continuously compared in the digital comparator 17 with a reading which has previously been entered in the DATUM register 18. The digital comparator 17 receives at 22 clock input pulses produced by the clock generator 9. The digital comparator produces a series of digital pulses at 26 which are fed as an input to the DISPLAY CONTROL LOGIC 10. The digital pulses at 26 are either high (1) or low (0) depending whether the signal from the CURRENT READING REGISTER 19 is equal or not to the value of the DATUM register. The END OF COUNT circuit 16 produces a low (0) signal which changes to high (1) when point X in diagram 2(c) has been reached. The DISPLAY CONTROL LOGIC 10 only counts pulses when these inputs to the DISPLAY CONTROL LOGIC 10 are unequal, i.e. one is high (1) and the other is low (0) or vice versa. Thus the counting of pulses commences when there is an EQUAL signal before the END OF PULSE signal and stops of receipt of the END OF PULSE signal or commences on receipt of the END OF PULSE signal, if this occurs before the EQUAL signal, and ends on receipt of the EQUAL signal.

The count signal produced in this way by the DISPLAY CONTROL LOGIC 10 is applied to a digital counter 23 which can pass a signal to a recorder 24 or the signal for circuit 10 could be passed direct to the recorder 24.

Alternatively or additionally the signal from the circuit 10 can be applied to a computer for a further calculation to be made or to a memory circuit of a computer for storage.

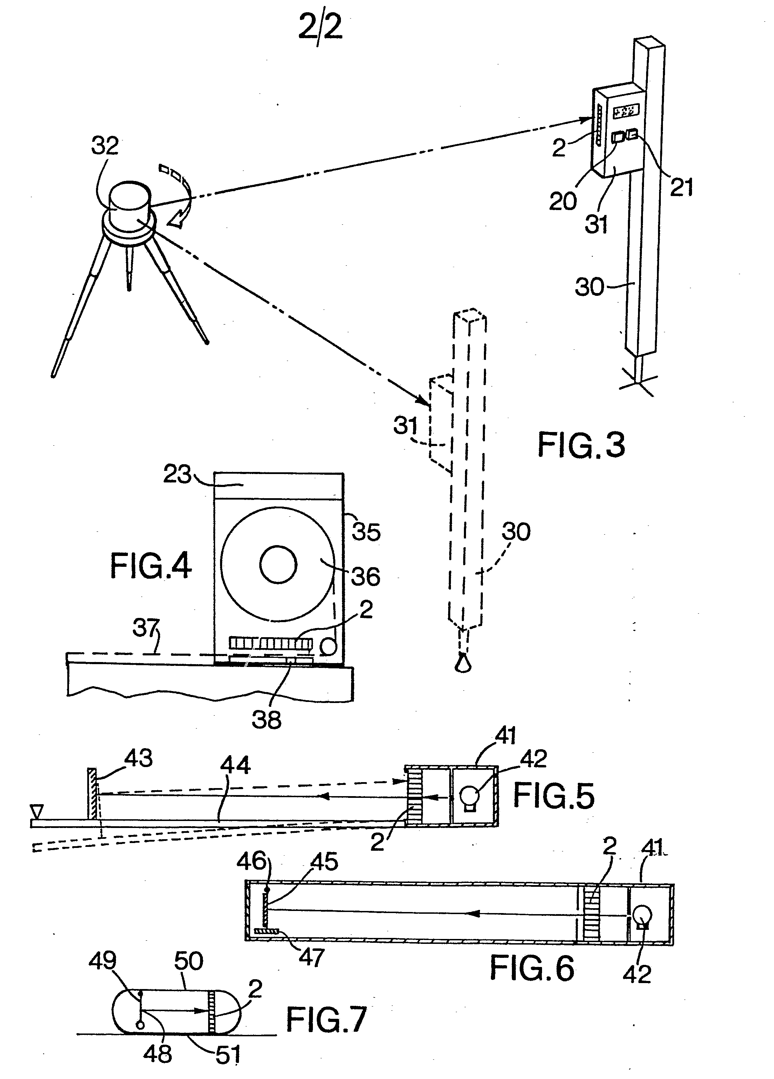

Figure 3 illustrates the digital measuring device when applied to measure linear deviation lengthwise of a surveyor's levelling staff 30. The circuitry illustrated in Figure 1, with the exception of the recording device 24, which is not provided in this application, is housed within casing 31 which is mounted on the staff 30 and is longitudinally adjustable thereon and arranged to be clamped thereon in a suitable position to which it has been set to receive a collimated laser beam from a laser projector 32 arranged to be rotatable about an upright axis. The casing 31 has an aperture therein facing the laser projector in which the light-sensitive elements 2 of the array, shown in Figure 1, are mounted. The casing 31 has a display window through which the display device 23 is visible and also the push buttons 20, 21 for operating the DATUM and CURRENT READING registers 18,19 respectively.

The measuring device is used by erecting the levelling staff at a first or datum position and the casing 31 is clamped to the staff with the elements 2 facing the laser projector which is mounted at a remote position. The datum button 20 is depressed and a first reading of the distance of the mid-point of the illuminated group of elements 2 from the zero position of the array is taken. The reading is automatically entered in the DATUM register as a count of pulses at the END OF COUNT signal, as already explained.

The levelling staff 30 is then moved to another position where a comparative reading is to be taken. The button 21 is pressed and so a reading which is automatically compared with the value entered in the DATUM register 18 is obtained, as described hereinbefore, the comparative reading being obtained by the count of pulses during which digital signals from the comparator 17 and the END OF COUNT circuit 16 are different, that is either one low (0) and the other high (1) or vice versa, the signals received by the comparator 17 being checked for equality at each clock pulse. Thus the reading seen in the display 21 is either positive or negative, depending whether the EQUAL signal is received before or after END OF COUNT signal and gives a reading of level compared with the datum reading . Coarse adjustment of the measuring device is made by moving the casing 31 bodily along a scale on the staff and re-clamping the casing 31 in a fresh position.

The level can be checked at any number of positions of the levelling staff and compared with the datum level, provided the laser projector 32 has not been moved. The combination of the levelling staff 30, the linear measuring device and the laser projector 32 enables a large number of levels to be taken quickly and extremely accurately.

Figure 4 illustrates the incorporation of the linear measuring device in a tape measure. The tape measure comprises a housing 35 containing a tape reel 36 carrying an opaque tape 37. The tape reel as described so far may be of any known construction. In accordance with this invention, the tape 37 has regularly spaced apertures along its length. The housing contains a light source 38 on one side of the tape 31 and the array of light-sensitive elements 2 on the other side of the tape. Thus each time an aperture in the tape passes the light source 38, several of the light-sensitive elements 2 will be illuminated. The housing 35 contains the circuitry described in Figure 1 including the display device 23, which is indicated by a window in the housing. The circuitry conveniently comprises the portion shown within the broken lines 25 together with the DISPLAY CONTROL LOGIC 10 and the display device 23. The display device 23 can count the number of apertures in the tape which have been drawn past the array as a "coarse" reading and the distance of the centre of the illuminated group of the array from a reference point as a "fine" reading. In this way the tape measure will give a direct measurement of distance and is also able to measure extremely small units of length as the elements 2 of the array can be arranged very close together, for example as close as 40 microns. Thus a tape which can be used to make measurements of an order of magnitude considerably smaller than those currently possibly is envisaged. Also the use of a modifying processor in or associated with the DISPLAY CONTROL LOGIC 10 would enable corrections due to thermal expansion or contraction of a steel tape to be made, thereby enabling the reading shown in the display 23 to be a corrected reading.

The processor enables other calculations to be made. For example the tape measure may be used to determine the number of floor joists required in a certain floor space by using the tape to "measure" the distance across the floor space, the display 23 indicating directly the number of floor joists which would be required in the floor space, the calculation having been performed automatically by the processor, or in a separate computer, into which data including the spacing distance between floor joists and their thickness has previously been programmed. Such a tape measure would therefore simplify an operation such as the setting of floor joists or similar operations.

Figure 5 shows a measuring device having a linear array of light-sensitive elements 2 receiving reflected light from a mirror. The array of elements 2 is mounted at one end of a housing 41 containing a light source 42 which is collimated to produce a ray which passes through an aperture in the array to a remote mirror 43. The housing 41 and the mirror 43 are spaced apart on a flexible member 44, for example a cantilever held at one end by the housing 41. On application of a load to deflect the member 44, the reflected beam will move across the array of elements 2 and so the display device of Figure 1, not shown in Figure 5 will show the linear deviation from the zero position. The flexible member 44 can be deflected by any load acting thereon and so may be used to measure weight or pressure or, where the member deflects under a change of temperature, for example, where it is constructed as a bi-metallic strip, to measure temperature. The housing 41 may incorporate circuitry similar to that shown in Figure 1 or the circuitry may be housed separately from the array of elements 2.

Figures 6 and 7 illustrate ways in which the linear measuring device can be used in a clinometer, level or plumb rule. In Figure 6 a collimated light beam is directed through an array of the elements 2, similarly to the arrangement shown in Figure 5 on to a mirror 45. In Figure 6, instead of the mirror being mounted on a flexible member, it is carried on a pendulum device. For example, the mirror 45 is pivoted at 46 and weighted at 47 and suitably damped to form the pendulum. The pivot 46 is mounted in a rigid extension of the housing 4 having a flat base and end wall and so by placing the base or end wall against a surface, the pendulum device will remain upright and will appear to swing with respect to the housing 41 where the latter is not arranged horizontally. Thus deviation of the mirror 45 will cause movement of the reflected light beam and the linear deviation of the beam with respect to the array will be measured and indicated by the display device 23. The incorporation of a computer in the logic circuit 10 enables the display device 23 to show directly angular deviation with respect to the horizontal or vertical. Figure 7 shows a similar device in which the light source 48 is carried on a pendulum device 49 and the array of elements 2 is stationary. The pendulum device 49 and the array of elements 2 are located within a housing 50 have a flat surface 51 which can be laid on a surface of which the level is to be tested. The circuitry shown in Figure 1 can be located within the housing 50 or be positioned remotely therefrom.

CLAIMS

1.

A digital measuring device characterised in that the device comprises an array of light-sensitive elements (2) positioned at predetermined spacings from each other and from a reference point along a locus; means (5) for detecting which of the elements are illuminated by a light beam (3) directed onto the array from a source remote therefrom ; processor means (8,11,10) to determine the position of the centre of a group of adjacent illuminated elements, in the direction of the locus, from the reference point and to produce a corresponding digital output, and an output device (23) to receive said digital output and to perform any of the following functions or any combination thereof:- to display, record or to transmit data corresponding to said digital output.

2. A measuring device as claimed in Claim 1 in which said processor means includes a pulse generator operable to produce a serial train of regular pulses, or connected to receive such a serial train from an external pulse generator, and a shift register (14) receiving information from the detector means (5) and operable to produce a shift register output having a low output (0) corresponding to unlit elements of the array and a high output (1) corresponding to the illuminated elements (4) of the array, the processor means also including means for counting one unit for each pulse of the serial train during the low output (0) and one unit for each pair of adjacent pulses of the serial train during the high output (1) and means (16) for stopping the count at the pulse which occurs when the high output (1) changes to low output (0), the total count therefore representing the number of whole pulses from the commencement of the serial train to the pulse when the high output (1) changes to low output (0) and thus being equivalent to the linear distance along the locus from the aforesaid reference point, at which point the serial train is started, to the mid-point of the group of adjacent illuminated elements of the array.

3. A measuring device as claimed in Claim 2 including a datum register (18) operable to store an output signal from the shift register (14) as a datum value; a current reading register (19) operable to store an instantaneous output signal from the shift register (14); a digital comparator (17) operable to compare a value stored by the current reading register (19) and a value stored by the datum register (18), and control logic means (10) connected to receive a first input signal from the output of the digital computer (17), which signal changes between low (0) and high (1) depending whether or not the values compared by the digital comparator are equal and a second input signal being an end of count signal from said means (16) for stopping the count, the control logic means (10) having a clocked output signal which is led to said output device and produced only during the period when the first and second input signals to said control logic means are unequal, that.is when one is low (0) and the other is high (1) and vice versa.

4. A measuring device as claimed in any preceding claim in which said detecting means responsive to said array of light-sensitive elements produces a plurality of digital outputs in parallel and the measuring device includes a parallel input - series output (PISO) register (7) converting said plurality of digital outputs to a series output signal to be passed as an input to said processor means (11).

5. A measuring device as claimed in any preceding claim in which the array is mounted to receive a light beam (3) from a light source and to be responsive to relative movement along the locus of the array from the reference point to the centre of said group (4) of illuminated elements (2) of the array between said light source and said array.

6. A measuring device as claimed in Claim 5 in which said measuring device (31) is mounted on a surveyor's levelling staff (30) and is responsive to a light beam received from a collimated light source (32) remote from said array. (Figure 3).

7. A measuring device as claimed in Claim 5 including a tape reel (36) on which there is wound an opaque tape (37) having regularly spaced apertures therein, a light source (38) and said array of elements (2) mounted on opposite sides of a portion of said tape (37) which is unwound from said reel, whereby said array receives light from said light source through each said aperture as the tape (37) is unwound and rewound on said reel (38). (Figure 4).

8. A measuring device as claimed in Claim 5 including a tiltable mirror (43,45) mounted to reflect a beam of light from a light source (42) onto said array of elements (2), said mirror (43,45) being movable from a datum position in dependence of a function to be measured. (Figures 5 and 6).

9. A measuring device as claimed in Claim 8 in which the mirror is mounted on a pendulum device (45,47) having a pivot (46) fixed with respect to said array of elements (2), whereby deflection of said reflected beam of light is a function of deviation of said array from a vertical datum position. (Figure 6).

10. A measuring device as claimed in Claim 8 in which the mirror is mounted on a flexible member (44) which is fixed at a position remote from the mirror (43) to said array of elements (2), whereby deflection of said reflected beam of light is a function of deviation of said mirror (43) from said array. (Figure 5).

11. A measuring device as claimed in Claim 10 in which said flexible member is a cantilever fixed to said array of elements (2) and carrying said mirror (43) at a position on the cantilever (44) remote from said array of elements (2), whereby deflection of said reflected beam of light is a function of deflection of said cantilever (44) under load. (Figure 5).

12. A measuring device as claimed in Claim 5 including a pendulum device (49) on which a light source (48) emitting a beam of light is mounted and having a pivot fixed with respect to said array of elements (2), the beam of light being directed onto said array of elements (2) which are positioned remotely from said pendulum device (49) whereby deflection of said beam of light is a function of deviation of said array of elements (2) from a vertical datum position. (Figure 7).

FIG.1

FIG.2

0046647

2/2

32

2

20 31 21

30

31

FIG.3

FIG.4

23

35

36

37

2

38

30

43 44 41 42

FIG.5

2

46 45 2 41

47

FIG.6

42

49 50 2

FIG.7

48 51